# EUROPÄISCHE PATENTSCHRIFT

(11) **EP 2 256 438 B1**
(45) Veröffentlichungstag und Bekanntmachung des Hinweises auf die Patenterteilung: **19.09.2018**
(21) Anmeldenummer: 10005575.5
(22) Anmeldetag: 28.05.2010
(51) Int. Cl.: F25B 41/00, B64D 13/00

(54) **Verbesserte Kälteerzeugungsvorrichtung, insbesondere für Flugzeuge**
Improved cooler, in particular for airplanes
Dispositif amélioré de production de froid, notamment pour avions

(30) Priorität: 29.05.2009 DE 102009023394; 29.05.2009 US 21735809 P
(43) Veröffentlichungstag der Anmeldung: 01.12.2010
(73) Patentinhaber: Airbus Operations GmbH, 21129 Hamburg (DE)
(72) Erfinder: Noriega, Dr.-Ing. Wilson, Willy, Casas, 21147 Hamburg (DE); Wischhusen, Stefan, Dr., 22527 Hamburg (DE); Ebigt, Wolfgang, Dipl.-Ing., 22763 Hamburg (DE); Kastell, Dirk, Dr.-Ing., 22587 Hamburg (DE)
(74) Vertreter: Beyer, Andreas

(56) Entgegenhaltungen:
- WO-A1-95/21360
- CA-A1- 2 298 373
- DE-U1-202008 016 671
- FR-A1- 2 362 346
- GB-A- 2 314 149
- JP-A- H08 320 161
- US-A- 2 892 321
- US-A1- 2008 115 515

## Beschreibung

Die Erfindung betrifft eine Kälteerzeugungsvorrichtung, insbesondere für ein Flugzeug, mit einem Kältemittelkreislauf, in dem ein Kältemittelbehälter, ein Expansionsventil, ein Verdampfer, ein Kompressor und ein Kondensator angeordnet sind.

Kälteerzeugungsvorrichtungen dieser Art sind allgemein bekannt und finden beispielsweise in Kühlschränken oder Klimaanlagen Verwendung. Ein gekühltes Kältemittel strömt aus dem Kältemittelbehälter durch das Expansionsventil zu einem Verdampfer, in dem ein zu kühlendes Medium, z.B. Luft oder eine zu kühlende Flüssigkeit, einen Teil der in ihm enthaltenen Wärme an das Kältemittel überträgt und dadurch selbst gekühlt wird, während das Kältemittel aufgrund der zugeführten Wärmeenergie verdampft. Das nunmehr gasförmige Kältemittel wird anschließend mittels des Kompressors komprimiert und in dem sich durch die Komprimierung ergebenden überhitzten Zustand durch den Kondensator geleitet, der von einem Kühlmedium (üblicherweise Umgebungsluft) gekühlt wird. In dem Kondensator wird das Kältemittel soweit abgekühlt, bis es kondensiert. Das jetzt wieder flüssige Kältemittel fließt zurück in den Kältemittelbehälter und der Kreislauf kann von neuem beginnen.

Kälteerzeugungsvorrichtungen in Flugzeugen arbeiten nach demselben Prinzip. Weil jedoch während eines Fluges in den heutzutage üblichen Flughöhen die Umgebungstemperatur sehr niedrig ist und in der Regel in einem Bereich zwischen -30°C und -60°C liegt, fällt aufgrund der Abkühlung des Kältemittels der Systemdruck im Kondensator so weit, dass ein Betrieb des Kompressors nicht mehr möglich ist. Zur Vermeidung des vorgenannten Problems wird in Flugzeugen beim Vorliegen der genannten, sehr niedrigen Umgebungstemperaturen nur ein kleinerer Anteil des vom Kompressor komprimierten, heißen Kältemittelgases durch den Kondensator geleitet, während der verbleibende, größere Anteil am Kondensator vorbei (und damit ungekühlt) zum Kältemittelbehälter geführt wird, um einen Mindestsystemdruck zu gewährleisten, bei dem der Kompressor arbeiten und den Kühlmittelkreislauf aufrechtzuerhalten kann.

JP H08 320161 A offenbart ein Klimatisierungssystem mit einem Kompressor, der mit einer Leitung umgangen werden kann. In der Leitung ist ein Ventil angeordnet. Eine Pumpe ist nach dem Kondensator und vor dem Verdampfer angeordnet.

GB 2 314 149 A offenbart einen Kompressor, der mit einer Leitung umgangen werden kann. In einer Leitung ist ein Dreiwegeventil angeordnet, das zur Umgehung des Kompressors einen Fluidstrom durch die Leitung leiten kann. Der Kondensator ist auf einem höheren Niveau oberhalb des Verdampfers angeordnet, so dass das flüssige Kühlmittel durch die Schwerkraft zu dem Verdampfer strömt. Zudem ist auch ein Expansionsventil vorgesehen. FR2362346 offenbart eine Kälteerzeugungsvorrichtung gemäß den Oberbegriff des Anspruchs 1.

Der Erfindung liegt die Aufgabe zugrunde, eine verbesserte Kälteerzeugungsvorrichtung anzugeben, die energiesparender und zuverlässiger im Betrieb ist.

Gemäß einer ersten grundsätzlichen Ausführungsform ist diese Aufgabe ausgehend von einer eingangs genannten Kälteerzeugungsvorrichtung erfindungsgemäß gelöst wie beschrieben im Anspruch 1.

Bei einer solchen Kälteerzeugungsvorrichtung kann bei sehr kalten Umgebungstemperaturen der Kompressor ausgeschaltet und das Bypassventil in der Kompressorumgehungsleitung geöffnet werden. Das aus dem Verdampfer kommende, flüssiggasförmige oder nur gasförmige Kältemittel strömt dann unter Umgehung des Kompressors durch den Kondensator und wieder zurück in den Kältemittelbehälter. Die Kältemittelpumpe dient zum Aufrechterhalten des Kältemittelkreislaufs und braucht nur den Druckverlust in den Leitungen des Kreislaufs sowie der im Kreislauf enthaltenen Komponenten zu überwinden. Die von der Kältemittelpumpe zu leistende Arbeit ist aufgrund der zu überwindenden, niedrigen Druckdifferenz von deutlich weniger als 1 bar nur klein, so dass die Kältemittelpumpe nur wenig (elektrische) Leistung benötigt. Die Energieeinsparung gegenüber dem herkömmlich verwendeten Kompressor ist in solchen Betriebszuständen deshalb signifikant. Bei einem Flugzeug verringert sich dadurch der Treibstoffverbrauch.

Ferner werden die Lebensdauer und die Zuverlässigkeit der Kälteerzeugungsvorrichtung verlängert, denn der Kompressor muss während der Zeitdauer, während der die geringe Umgebungstemperatur zur Verfügung steht, nicht betrieben werden. Auch braucht der Kompressor nicht mehr für einen Betrieb bei sehr kalten Temperaturen ausgelegt zu werden und stellt beispielsweise geringere Anforderungen an seine Schmierung. Schließlich arbeitet die erfindungsgemäße Kälteerzeugungsvorrichtung selbst bei einem beschädigten Kompressor dann noch, wenn die niedrige Umgebungstemperatur zur Verfügung steht. Insgesamt ergibt sich insbesondere bei einem Einsatz der erfindungsgemäßen Kälteerzeugungsvorrichtung in einem Flugzeug, das sich im Betrieb lange in Phasen befindet, in denen eine sehr niedrige Umgebungstemperatur zur Verfügung steht, eine spürbare Verringerung des Treibstoffverbrauchs und eine bedeutend erhöhte Zuverlässigkeit bzw. Verfügbarkeit der Kälteerzeugungsvorrichtung.

In der erfindungsgemäßen Kälteerzeugungsvorrichtung ist die Kältemittelpumpe nach dem Kältemittelbehälter im Kältemittelkreislauf angeordnet. Die Kältemittelpumpe fördert das flüssige Kältemittel aus dem Kältemittelbehälter durch das offene Expansionsventil in den Verdampfer.

Die Kältemittelpumpe ist parallel zum Expansionsventil geschaltet und das Expansionsventil wird automatisch geschlossen, wenn die Kältemittelpumpe in Betrieb ist. Vorzugsweise ist das Expansionsventil ein elektronisch gesteuertes Ventil und nicht wie im Stand der Technik (FR-2362346) üblich ein thermostatisch gesteuertes Ventil.

Gemäß einem zweiten grundsätzlichen Beispiel wird die obengenannte Aufgabe ausgehend von der eingangs genannten Art einer Kälteerzeugungsvorrichtung dadurch gelöst, dass der Kältemittelkreislauf zusätzlich eine Kompressorumgehungsleitung mit einem darin angeordneten Bypassventil aufweist und dass der Kondensator in dem Kältemittelkreislauf auf einem höheren geodätischen Niveau angeordnet ist als der Verdampfer. Dieses Beispiel ist noch energiesparender als die erste grundsätzliche Ausführungsform, weil aufgrund des auf einem höheren Niveau angeordneten Kondensators die Kältemittelpumpe entfallen kann. Man erhält bei diesem Beispiel aufgrund der Temperatur- und Druckunterschiede im Kältemittelkreislauf einen natürlichen Umlauf des Kältemittels. Ist es nicht möglich, den Kondensator höher als den Verdampfer anzuordnen, muss auf die erste grundsätzliche Ausführungsform zurückgegriffen werden. Bei allen vorgenannten Ausführungsformen ist vorzugsweise das Bypassventil fernbedienbar, d.h. es ist mit einem motorischen Antrieb versehen und kann ferngesteuert geöffnet oder geschlossen werden.

Besonders bevorzugte Ausgestaltungen der erfindungsgemäßen Kälteerzeugungsvorrichtung umfassen eine Messeinrichtung, die ein die Umgebungstemperatur angebendes Signal ausgibt, wobei in Abhängigkeit dieses Signals der Kompressor ausgeschaltet und das Bypassventil geöffnet oder der Kompressor eingeschaltet und das Bypassventil geschlossen werden. Wird bei einem solchen System eine vorbestimmte Umgebungstemperatur unterschritten, wird der Kompressor ausgeschaltet und das Bypassventil geöffnet. Handelt es sich bei der Kälteerzeugungsvorrichtung um die erste grundsätzliche Ausführungsform, so wird zusätzlich die Kältemittelpumpe eingeschaltet. Wird hingegen eine vorbestimmte Umgebungstemperatur überschritten, so werden das Bypassventil geschlossen und der Kompressor eingeschaltet. Ist eine Kältemittelpumpe vorhanden, so wird diese ausgeschaltet. Vorzugsweise ist die Messeinrichtung so ausgestaltet, dass sie die Umgebungstemperatur am Kondensator oder in dessen Nähe misst.

Der Kältemittelbehälter ist vorzugsweise so ausgestaltet, dass er das durch ihn strömende Kältemittel filtert und/oder trocknet, d.h. von Wasser befreit. Als Kältemittel können in der erfindungsgemäßen Kälteerzeugungsvorrichtung alle üblicherweise in Kälteerzeugungsvorrichtungen verwendeten Kältemittel zum Einsatz kommen.

Ein Ausführungsbeispiel einer erfindungsgemäßen Kälteerzeugungsvorrichtung wird im Folgenden anhand der beigefügten, schematischen Figuren zusammen mit weiteren Vorteilen näher erläutert. Es zeigt:
- Figur 1: ein Fließschema einer erfindungsgemäßen Kälteerzeugungsvorrichtung, und
- Figur 2: ein Druck/Enthalpie-Diagramm zur Verdeutlichung der energetischen Vorteile der erfindungsgemäßen Kälteerzeugungsvorrichtung.

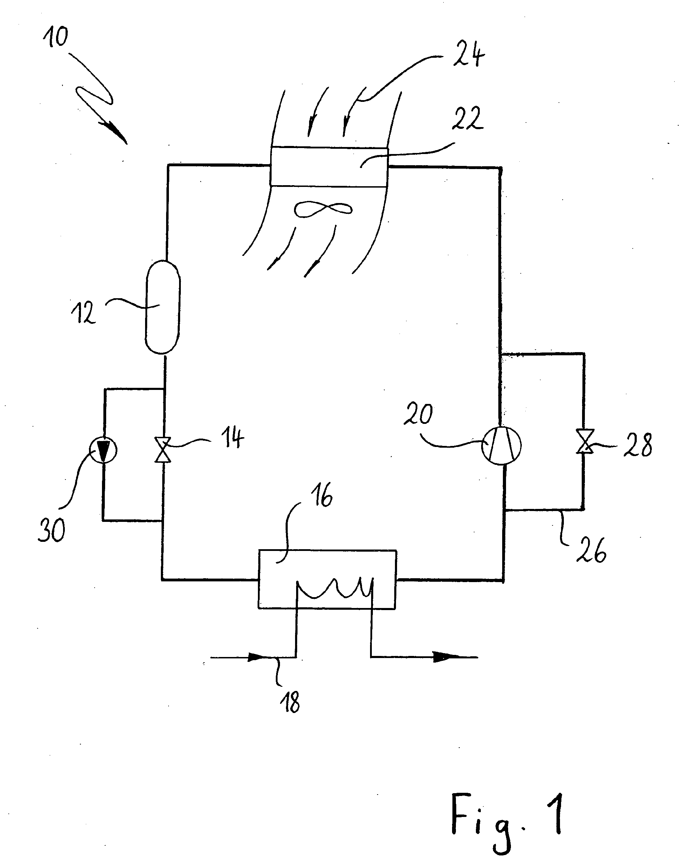

In Figur 1 ist schematisch eine allgemein mit 10 bezeichnete Kälteerzeugungsvorrichtung dargestellt. Die Kälteerzeugungsvorrichtung 10 dient dazu, ein Kältemittel in einem Kreislauf zu führen und dabei unter Zuhilfenahme des Kältemittels einem zu kühlenden Medium, beispielsweise einer Flüssigkeit oder Luft, Wärme zu entziehen. Das sich durch die Wärmeaufnahme aufheizende Kältemittel wird anschließend wieder gekühlt, um zur erneuten Wärmeaufnahme bereitzustehen.

Die Kälteerzeugungsvorrichtung 10 umfasst einen Kältemittelbehälter 12 zur Aufnahme eines Vorrats an flüssigem Kältemittel. In Strömungsrichtung des Kältemittels folgt auf den Kältemittelbehälter 12 ein Expansionsventil 14, welches das im Kältemittelbehälter 12 unter Druck stehende Kältemittel entspannt und dabei weiter abkühlt. Im gezeigten Ausführungsbeispiel ist das Expansionsventil 14 elektronisch geregelt, d.h. das Maß seiner Offenstellung ist geregelt von einer nicht dargestellten Steuereinheit variabel einstellbar, um den Grad der Entspannung je nach Bedarf einstellen zu können.

An das Expansionsventil 14 schließt sich in dem Kältemittelkreislauf ein Verdampfer 16 an, der von dem zu kühlenden Medium 18 durchströmt wird. Dabei kühlt sich das Medium 18 ab und überträgt Wärme auf das den Verdampfer 16 passierende Kältemittel, welches daraufhin herkömmlicherweise in den gasförmigen Zustand übergeht, d.h. verdampft.

Das nun gasförmige Kältemittel durchströmt anschließend einen im Kältemittelkreislauf angeordneten Kompressor 20, der das gasförmige Kältemittel komprimiert und dadurch in einen überhitzten Zustand bringt. Um zu verhindern, dass der Kompressor 20 mit Flüssigkeit voll läuft, kann am Kompressoreintritt oder Kompressoraustritt ein Rückschlagventil vorhanden sein (nicht dargestellt).

Aus dem Kompressor 20 gelangt das gasförmige, überhitzte Kältemittel in einen Kondensator 22, der zur Abkühlung des Kältemittels von einem Kühlmedium 24 durchströmt wird, beispielsweise von Umgebungsluft. Die im Kondensator 22 erfolgende Abkühlung des Kältemittels lässt dieses wieder kondensieren und es gelangt im flüssigen Zustand zurück in den Kältemittelbehälter 12.

Der zuvor beschriebene Aufbau und dessen Funktion entspricht einer herkömmlichen Kälteerzeugungsvorrichtung. Zur Energieeinsparung und zur Erhöhung der Zuverlässigkeit und Verfügbarkeit der Kälteerzeugungsvorrichtung 10 umfasst diese zusätzlich eine Kompressorumgehungsleitung 26 mit einem darin angeordneten Bypassventil 28 sowie eine Kältemittelpumpe 30, die erfindungsgemäß parallel zum Expansionsventil 14 in den Kältemittelkreislauf geschaltet ist. Das Expansionsventil 14 ist im vorliegenden Fall ein elektronisch gesteuertes Ventil. Am druckseitigen Ausgang der Kältemittelpumpe 30 ist ein Rückschlagventil in der das Expansionsventil 14 umgehenden Leitung angeordnet, das auch in die Kältemittelpumpe 30 integriert sein kann. Dieses Rückschlagventil öffnet erst bei laufender Kältemittelpumpe 30 und sperrt ansonsten die Leitung, in der sich Kältemittelpumpe 30 befindet.

Diese zusätzlichen Komponenten gestatten es, die Kälteerzeugungsvorrichtung 10 auf zwei verschiedene Arten zu betreiben. Befindet sich die Temperatur des Kühlmediums 24 in einem normalen Bereich, beispielsweise in einem Bereich zwischen -10°C und +40°C, dann wird die Kälteerzeugungsvorrichtung 10 auf die oben beschriebene, herkömmliche Weise betrieben. In diesem herkömmlichen Betriebszustand ist das Bypassventil 28 geschlossen und die Kältemittelpumpe 30 ausgeschaltet, während das Expansionsventil 14 bedarfsabhängig geöffnet ist.

Sinkt die Temperatur des Kühlmediums 24 unter einen vorbestimmten Wert, z.B. unter -30°C, wird die Kälteerzeugungsvorrichtung 10 in einer zweiten Betriebsart betrieben, in der der Kompressor 20 ausgeschaltet ist, das Bypassventil 28 geöffnet ist und die Kältemittelpumpe 30 eingeschaltet ist. Das Expansionsventil 14 ist in dieser zweiten Betriebsart geschlossen.

In der zweiten Betriebsart sorgt nicht mehr der Kompressor 20, sondern die Kältemittelpumpe 30 für ein Umlaufen des Kältemittels im Kreislauf. Da das Kältemittel aufgrund der niedrigen Temperatur des Kühlmediums 24 im Kondensator 22 auf eine tiefere Temperatur heruntergekühlt wird als in der ersten, herkömmlichen Betriebsart, kommt es im Verdampfer 16 in der Regel nur zu einem teilweisen Verdampfen des Kältemittels, d.h. aus dem Verdampfer 16 strömt zumeist ein Zweiphasengemisch aus flüssigem und gasförmigem Kältemittel durch die Kompressorumgehungsleitung 26 in den Kondensator 22. Die im Kondensator 22 erfolgende Abkühlung führt das Kältemittel wieder vollständig in den flüssigen Zustand zurück.

Weil der Kompressor 20 zur Verdichtung des gasförmigen Kältemittels erheblich mehr Energie benötigt als die Kältemittelpumpe 30 zum Umwälzen des flüssigen Kältemittels im Kreislauf, benötigt die Kälteerzeugungsvorrichtung 10 in ihrer zweiten Betriebsart deutlich weniger Energie. Zugleich wird in der zweiten Betriebsart der Kompressor 20 geschont, was seine Lebensdauer deutlich verlängert und die Wahrscheinlichkeit seines Ausfalls verringert.

Das Umschalten der Kälteerzeugungsvorrichtung 10 zwischen den beiden genannten Betriebsarten kann manuell erfolgen, findet vorzugsweise aber automatisch mittels einer nicht dargestellten Steuereinheit statt, die mit den einzelnen Komponenten der Vorrichtung 10 elektrisch verbunden ist, insbesondere mit dem Expansionsventil 14, der Kältemittelpumpe 30, dem Kompressor 20 und dem Bypassventil 28 in der Kompressorumgehungsleitung 26. Diese Steuereinheit ist ferner mit einer nicht gezeigten Temperaturmesseinrichtung verbunden, die über einen geeigneten Sensor (nicht dargestellt) die Temperatur des Kühlmediums 24 bestimmt, vorzugsweise an einer Stelle kurz bevor das Kühlmedium 24 den Kondensator 22 durchströmt. Wird eine vorher festgelegte Temperatur des Kühlmediums 24 unterschritten, schaltet die Steuereinheit die Kälteerzeugungsvorrichtung 10 in ihre zweite Betriebsart. Bei Überschreiten einer vorher festgelegten Temperatur des Kühlmediums 24 schaltet die Steuereinheit die Kälteerzeugungsvorrichtung 10 in die erste Betriebsart. Um bei einem geringfügigen Schwanken der Temperatur des Kühlmediums 24 ein ständiges Hin- und Herschalten zwischen erster und zweiter Betriebsart zu vermeiden, sind die beiden vorher festgelegten Temperaturen vorzugsweise nicht identisch, sondern unterscheiden sich um ein Maß Δt, welches beispielsweise 5°C betragen kann.

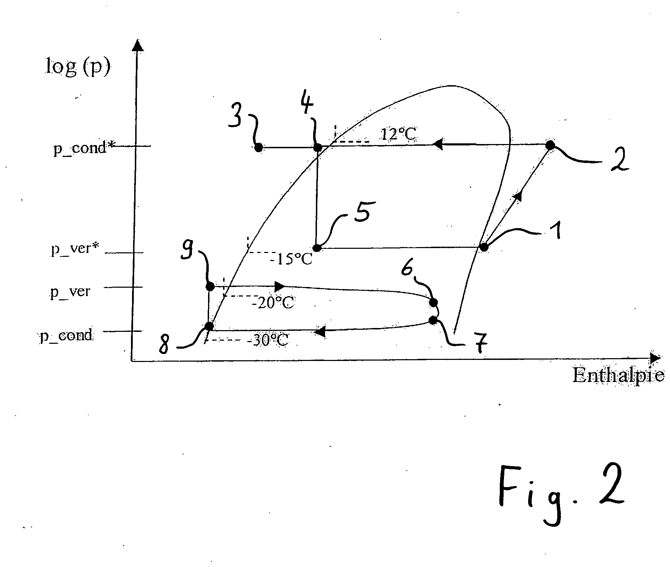

In Figur 2 sind anhand eines Druck/Enthalpie-Diagramms und verschiedener Betriebspunkte die Vorteile der zweiten Betriebsart ersichtlich.

Beim bekannten herkömmlichen System verläuft der Kälteerzeugungsprozess im Flugbetrieb mit einer vergleichsweise großen Druckdifferenz (p_cond*-p_ver*) zwischen Verdampfer und Kondensator, die vom Kompressor 20 erzeugt werden muss. In der Figur 2 stellen die Punkte 1 bis 5 den Verlauf des herkömmlichen Kälteerzeugungsprozesses unter Einsatz des Kompressors 20 dar. Dabei symbolisiert der Punkt 1 den Zustand des Kältemittels am Verdampferaustritt, der Punkt 2 den Zustand des Kältemittels am Kondensatoreintritt, der Punkt 3 den Zustand des nach Durchströmen des Kondensators heruntergekühlten Kältemittels, der Punkt 4 einen Kältemittelmischpunkt, der sich ergibt, wenn Kältemittel mit dem Zustand des Punktes 3 gemischt wird mit gasförmigem Kältemittel, welches vom Kompressorausgang unter Umgehung des Kondensators dem Kältemittelkreislauf stromabwärts des Kondensators wieder zugeführt wird, und der Punkt 5 den Zustand des Kältemittels am Ausgang des Expansionsventils.

Im Gegensatz dazu wird mit der vorgeschlagenen Lösung Wärme bei einem Druckniveau zwischen Kondensator (p_cond) und Verdampfer (p_ver) transportiert, das ungefähr dem Sättigungsdruck des Kältemittels bei der vorliegenden Außentemperatur entspricht. In der Figur 2 symbolisieren die Zustandspunkte 6 bis 9 den Kälteerzeugungsprozess im Flugbetrieb, wie er gemäß der vorliegenden Erfindung abläuft. Dabei stellt der Punkt 6 den Zustand des Kältemittels am Verdampferaustritt, der Punkt 7 den Zustand des Kältemittels am Kondensatoreintritt, der Punkt 8 den Zustand des Kältemittels am Kältemittelpumpeneintritt und der Punkt 9 den Zustand des Kältemittels am Kältemittelpumpenaustritt dar. Es ist gut zu erkennen, dass die von der Pumpe 30 zu leistende Arbeit sich auf die Aufrechterhaltung des Kreislaufes (Druckverluste in den Geräten und in den Leitungen) beschränkt. Durch die vergleichsweise niedrige Druckdifferenz von weit weniger als 1 bar ist sehr wenig elektrische Leistung zum Betrieb der Kältemittelpumpe 30 erforderlich.

Wenn es möglich ist, den Kondensator 22 der Kälteerzeugungsvorrichtung 10 auf einem höheren Niveau als den Verdampfer 16 anzuordnen, kann gemäß einer zweiten, hier nicht gezeigten Ausführungsvariante die Kältemittelpumpe 30 auch entfallen, da dann die Temperatur bzw. Druckunterschiede im Kältemittelkreislauf für einen natürlichen Umlauf des Kältemittels sorgen.

## Patentansprüche

1. Kälteerzeugungsvorrichtung (10), insbesondere für ein Flugzeug, mit einem Kältemittelkreislauf, in dem
- ein Kältemittelbehälter (12),
- ein Expansionsventil (14),
- ein Verdampfer (16),
- ein Kompressor (20), und
- ein Kondensator (22)
angeordnet sind;
wobei der Kältemittelkreislauf ferner eine Kompressorumgehungsleitung (26) mit einem darin angeordneten Bypassventil (28) und eine Kältemittelpumpe (30) aufweist, die nach dem Kondensator (22) und vor dem Verdampfer (16) angeordnet ist, wobei die Kältemittelpumpe (30) nach dem Kältemittelbehälter (12) im Kältemittelkreislauf angeordnet ist, und die Kältemittelpumpe (30) parallel zum Expansionsventil (14) geschaltet ist, **dadurch gekennzeichnet dass** am druckseitigen Ausgang der Kältemittelpumpe (30) ein Rückschlagventil in der das Expansionsventil (14) umgehenden Leitung angeordnet ist, das auch in die Kältemittelpumpe (30) integriert sein kann, und wobei das Expansionsventil (14) sich automatisch schließt, wenn die Kältemittelpumpe (30) in Betrieb ist.

2. Kälteerzeugungsvorrichtung nach einem der vorhergehenden Ansprüche, **dadurch gekennzeichnet, dass** das Bypassventil (28) fernbedienbar ist.

3. Kälteerzeugungsvorrichtung nach einem der vorhergehenden Ansprüche, **dadurch gekennzeichnet, dass** das Expansionsventil (14) ein elektronisch gesteuertes Ventil ist.

4. Kälteerzeugungsvorrichtung nach einem der vorhergehenden Ansprüche, **dadurch gekennzeichnet, dass** eine Messeinrichtung vorhanden ist, die ein die Umgebungstemperatur angebendes Signal ausgibt, und dass in Abhängigkeit dieses Signals der Kompressor (20) ausgeschaltet und das Bypassventil (28) geöffnet oder der Kompressor (20) eingeschaltet und das Bypassventil (28) geschlossen wird.

5. Kälteerzeugungsvorrichtung nach Anspruch 4,
**dadurch gekennzeichnet, dass** die Messeinrichtung die Umgebungstemperatur am Kondensator (22) oder in der Nähe desselben misst.

6. Kälteerzeugungsvorrichtung nach einem der vorhergehenden Ansprüche, **dadurch gekennzeichnet, dass** der Kältemittelbehälter (12) das durch ihn strömende Kältemittel filtert und/oder trocknet.

## Claims

1. Refrigerating device (10), in particular for an aircraft, having a refrigerant circuit, in which are disposed:
- a refrigerant container (12),
- an expansion valve (14),
- an evaporator (16),
- a compressor (20), and
- a condenser (22),
wherein the refrigerant circuit further comprises a compressor bypass line (26), in which a bypass valve (28) is disposed, as well as a refrigerant pump (30) that is disposed downstream of the condenser (22) and upstream of the evaporator (16), wherein the refrigerant pump (30) is disposed downstream of the refrigerant container (12) in the refrigerant circuit, and the refrigerant pump (30) is connected in parallel to the expansion valve (14),
**characterised in that** at the pressure side outlet of the refrigerant pump (30) a check valve is arranged in the line bypassing the expansion valve (14), which check valve may also be integrated into the refrigerant pump (30), and wherein the expansion valve (14) closes automatically when the refrigerant pump (30) is in operation.

2. Refrigerating device according to claim 1,
**characterised in that** the bypass valve (28) is remote controllable.

3. Refrigerating device according to one of the preceding claims,
**characterised in that** the expansion valve (14) is an electronically controlled valve.

4. Refrigerating device according to claim 1,
**characterised in that** a measuring device is provided, which outputs a signal indicating the ambient temperature, and that in dependence upon said signal the compressor (20) is switched off and the bypass valve (28) opened or the compressor (20) is switched on and the bypass valve (28) closed.

5. Refrigerating device according to claim 4,
**characterised in that** the measuring device measures the ambient temperature at the condenser (22) or in the vicinity thereof.

6. Refrigerating device according to one of the preceding claims,
**characterised in that** the refrigerant container (12) filters and/or dries the refrigerant flowing through it.

## Revendications

1. Dispositif de production de froid (10), en particulier pour un avion, comprenant un circuit de fluide frigorigène, dans lequel sont placés
- un réservoir de fluide frigorigène (12),
- une vanne de détente (14),
- un évaporateur (16),
- un compresseur (20) et
- un condensateur (22),
le circuit de fluide frigorigène présentant en outre une conduite de dérivation de compresseur (26) avec, dans cette conduite, une vanne de dérivation (28), et une pompe de fluide frigorigène (30) placée en aval du condensateur (22) et en amont de l'évaporateur (16), la pompe de fluide frigorigène (30) étant placée en aval du réservoir de fluide frigorigène (12) dans le circuit de fluide frigorigène et montée en parallèle par rapport à la vanne de détente (14),
**caractérisé en ce qu'**un clapet anti-retour est placé côté refoulement, à la sortie de la pompe de fluide frigorigène (30), dans la conduite de dérivation de la vanne de détente (14), ce clapet anti-retour pouvant être également intégré dans la pompe de fluide frigorigène (30), et la vanne de détente (14) se fermant automatiquement lorsque la pompe de fluide frigorigène (30) fonctionne.

2. Dispositif de production de froid selon l'une des revendications précédentes, **caractérisé en ce que** la vanne de dérivation (28) est commandable à distance.

3. Dispositif de production de froid selon l'une des revendications précédentes, **caractérisé en ce que** la vanne de détente (14) consiste en une vanne à commande électronique.

4. Dispositif de production de froid selon l'une des revendications précédentes, **caractérisé en ce qu'**il est installé un dispositif de mesure qui émet un signal indiquant la température ambiante, et **en ce qu'**en fonction du signal émis, le compresseur (20) sera coupé et la vanne de dérivation (28) ouverte ou le compresseur (20) allumé et la vanne de dérivation (28) fermée.

5. Dispositif de production de froid selon la revendication 4,
**caractérisé en ce que** le dispositif de mesure mesure la température ambiante au condensateur (22) ou à proximité de celui-ci.

6. Dispositif de production de froid selon l'une des revendications précédentes, **caractérisé en ce que** le réservoir de fluide frigorigène (12) filtre et/ou sèche le fluide frigorigène qui le traverse.
